# EUROPEAN PATENT APPLICATION

(11) **EP 1 563 980 A1**
(43) Date of publication of application: **17.08.2005**
(21) Application number: 05075312.8
(22) Date of filing: 09.02.2005
(51) Int. Cl.: B29C 45/14, B65D 1/22, G09F 3/00

(54) **In-mould labels in plastic crates**

(30) Priority: 10.02.2004 EP 04075417
(71) Applicant: D.W. PLASTICS N.V., 3740 Bilzen (BE)
(72) Inventor: Isenborghs, Francis, 1350 Jauche (BE)
(74) Representative: Beitsma, Gerhard Romano (

(57) **Abstract**

A plastic crate (1) has side walls (2, 3) which extend substantially perpendicularly from a base (4). A continuous in-mould label (9) is applied on at least two adjacent side walls (2, 3) so as to cover at least one comer (8) of the crate. The continuous in-mould label (9) may extend over all side walls (2, 3). A method of producing a plastic crate (1) provided with at least one in-mould label (9) may comprise the step of placing a continuous, circumferential label on a support element which is subsequently enclosed by wall sections of the mould.

## Description

The present invention relates to in-mould labels in plastic crates. More in particular, the present invention relates to a plastic crate, such as a bottle crate, provided with an in-mould label.

It is well known to provide plastic crates with so-called in-mould labels: labels that are placed in the mould before injection moulding the crate. International Patent Application WO 00/42591 (D W Plastics) discloses labels of this type. The labels may carry text and/or drawings and may serve to identify the contents of the crate or to display commercial messages.

Labels may be applied on one or more side walls of a crate, typically the two longer side walls of a rectangular crate. In most crates, the side walls are flat, thus defining a planar labelling surface. Even when a side wall has a raised part, as disclosed in German Patent Application DE 198 44 183, the side walls are essentially planar and each label therefore extends in substantially the single plane defined by the single side wall on which it is applied. As a result, the size of the labels is limited by the dimensions of the individual side walls.

It is further known to provide small plastic objects, such as margarine containers, with in-mould labels. These containers, which are relatively flexible, may have curved surfaces on which labels are applied. Examples are disclosed in European Patent Application EP 0 481 090. These containers have inclined walls which cause the top of the container to be wider than the base. Such inclined walls facilitate the discharging of the product from the mould ("discharge angle"). Crates, however, are relatively stiff and typically have straight walls.

There is a need for crates, such as bottle crates, having labels which extend beyond the surfaces of the side walls. Such extended labels allow more marketing and/or product information to be displayed, thus improving sales.

It is an object of the present invention to overcome these and other problems of the Prior Art and to provide a plastic crate having a label which is not confined to a single side wall but extends beyond a single side wall onto a further side wall.

It is another object of the present invention to provide a method of producing a plastic crate having a label which is not confined to a single side wall.

It is a further object of the present invention to provide a mould for producing a plastic crate having a label which is not confined to a single side wall.

Accordingly, the present invention provides a plastic crate having side walls extending substantially perpendicularly from a base, a continuous in-mould label being applied on at least two side walls so as to cover at least one corner of the crate.

By providing a continuous in-mould label that extends beyond a single side wall of the crate and thereby wraps around a corner of the crate, a much larger label surface is obtained. This larger surface may be used for e.g. marketing information (brand name) and product information (ingredients). In addition, the visibility of the crate may be enhanced.

It is noted that the crate is preferably a bottle crate for storing and/or carrying beer bottles, wine bottles, water bottles and similar containers. However, the crate of the present invention may also be used for storing and/or carrying other objects, such as boxes, books, magazines, etc..

In the crate of the present invention, at least one label may extend over two side walls. One, two or more of such labels may be applied on the crate. However, it is also possible for a single in-mould label to extend over all side walls. The edges of such a label may meet so as to completely surround the crate, or may leave a gap showing part of a side wall. Preferably, however, the in-mould label has a completely uninterrupted circumference. That is, the label may constitute a closed sleeve which circumferentially surrounds the crate without any seams. This embodiment eliminates any mismatch of the meeting edges of the label, thus preventing any overlap or unintended gap between these edges.

The present invention also provides a method of producing a plastic crate as defined above using a mould having wall sections, a base section and a cover section, the method comprising the steps of:
- placing the at least one label on a support element.
- closing the wall sections around the support element,
- closing the mould, that is, bringing all sections together,
- injecting a plastic material into the mould,
- opening the mould, and
- removing the moulded crate from the mould.

By placing the at least one label on a support element, and then closing the wall sections around the support element, it is possible to apply a continuous in-mould label, even when the mould has a discharge angle equal to zero (that is, the walls of the mould are perpendicular to its base and are therefore not inclined). In addition, it is even possible to apply a circumferentially closed label.

In a preferred embodiment, the support element has variable dimensions, in particular a variable circumference. This allows the support element to be inserted in a circumferentially closed label, that is, a label formed as a sleeve. The support element can then be expanded to firmly hold the label. After positioning the label in the mould, the dimensions of the support element can be reduced to withdraw the support element without damaging the label. The support element may be part of an assembly robot or similar device.

The wall sections of the mould, which define the walls of the crate, may be substantially planar. The wall sections may be designed in such a way that the resulting crate is rectangular, polygonal or rounded. In certain embodiments the crate may be cylindrical.

However, it is also possible for a wall section defining walls of the crate to extend in two intersecting planes so as to define (and cover) a corner of the crate. In this case, the said wall section may define a whole label application section of the walls of the crate. This wall section may then support, during the moulding of the crate, a label that extends over and covers the corresponding corner of the crate.

In a first embodiment, the two intersecting planes are arranged at a right angle, so as to define a rectangular corner, as in typical bottle crates.

In a second embodiment, however, the two intersecting planes are arranged at an acute or obtuse angle so as to define an acute or obtuse corner of the mould and hence of the crate. This second embodiment allows alternative crate shapes, for example hexagonal or octagonal.

In a third embodiment, the at least one wall section is substantially rounded. In this embodiment, the wall section may still define a corner of a substantially rectangular crate, or the wall section may define a rounded (e.g. semi-circular) section of a substantially cylindrical crate. It will be understood that a rounded corner may still be said to extend in two intersecting planes, the planes at least being tangent to the rounded corner.

In an advantageous embodiment of the inventive method the mould comprises a single, circumferentially closed wall section. This allows a crate to be produced that has a single label that envelops the circumference of the crate.

The present invention further provides a mould for use in the method as defined above. Such a mould, which is preferably made of metal, may comprise one or more corner sections. More in particular, a mould for use in the method as defined above comprises wall sections, a base section and a cover section, at least two wall sections being provided with cavity slides for supporting the at least one continuous label, which mould is arranged for first closing the wall sections and then bringing the base section and cover section against the closed wall sections.

The present invention will further be explained below with reference to exemplary embodiments illustrated in the accompanying drawings, in which:
Fig. 1 schematically shows, in perspective, a mould for producing a plastic crate according to the Prior Art.
Fig. 2 schematically shows, in perspective, a first embodiment of a mould according to the present invention.
Fig. 3 schematically shows, in perspective, a second embodiment of a mould according to the present invention.
Fig. 4 schematically shows, in perspective, a third embodiment of a mould according to the present invention.
Fig. 5 schematically shows, in perspective, a fourth embodiment of a mould according to the present invention.
Fig. 6 schematically shows, in perspective, a first plastic crate produced in accordance with the present invention.
Fig. 7 schematically shows, in perspective, a second plastic crate produced in accordance with the present invention.
Fig. 8 schematically shows, in cross-section, production steps of a plastic crate in accordance with the present invention.

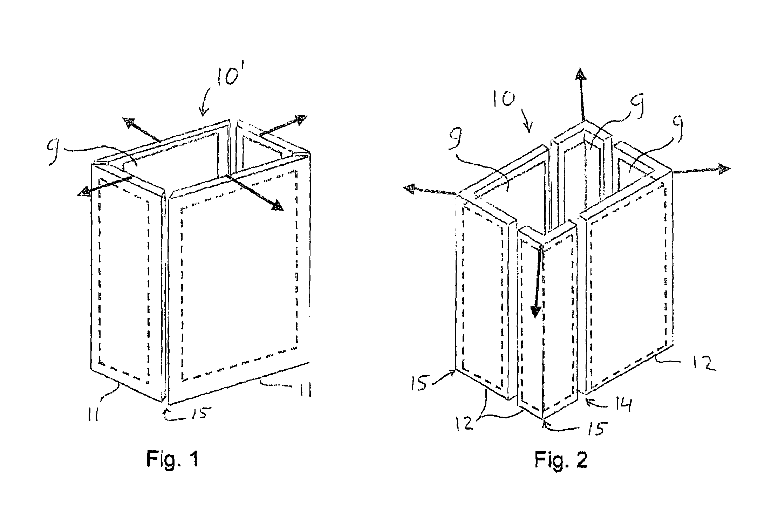

The Prior Art mould 10' shown in Fig. 1 comprises four essentially planar mould walls (wall sections) 11 which define a rectangular mould having four corners 15, where the walls join. In-mould labels 9 may be applied on each of the walls 11. As can be seen, each wall 11 constitutes a side wall, front wall or back wall of the mould 10' and comprises a single wall section.

When producing a crate or similar product, labels 9 are applied on one or more of the wall sections (or sections) 11 which are joined and placed on a mould base (not shown in Fig. 1). The labels are typically made of a plastic (for example polyethylene) film and may be held in the mould using air pressure or other known techniques. A mould cover (not shown in Fig. 1) is then placed on top of the mould 10'. Both the mould base and the mould cover may have suitable protrusions for defining the interior of the crate.

A suitable plastic material, such as liquid HDPE (high density polyethylene) is then injected into the mould through injection openings which may be provided in the walls, the cover and/or the base. Due to the heat of the plastic material, the labels bond with the crate material. After the plastic material of the crate has solidified sufficiently, the mould is opened and the crate is taken out. The arrows indicate the directions in which the walls 11 may be removed.

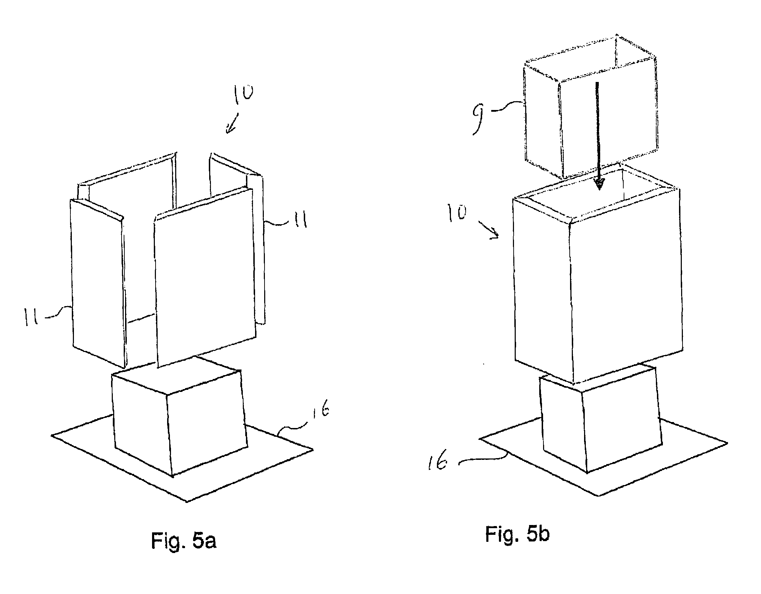

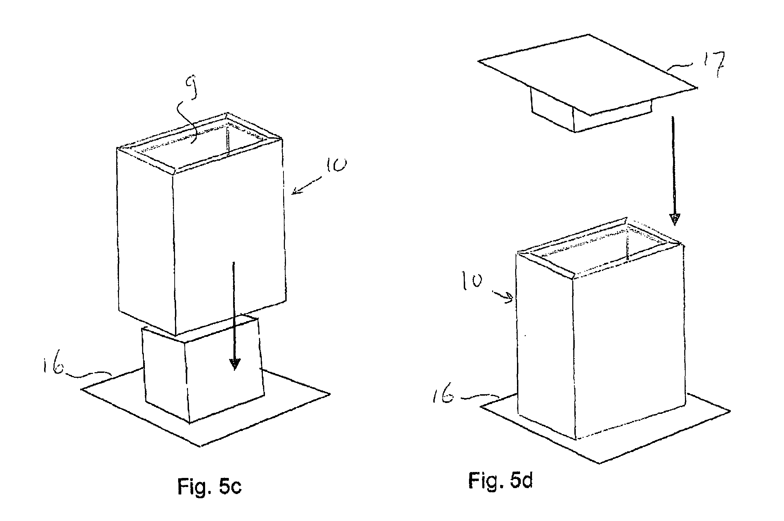

As can be seen from Fig. 1, the Prior Art method of providing plastic crates with in-mould labels is only suitable for applying labels that each extend over part of a single side wall. The present invention provides crates and methods in which a label extends over at least two side walls. To this end, the mould wall sections may each extend over at least two side walls of the crate, as illustrated in Figs. 2 - 4, or the label may extend over at least two mould wall sections, as illustrated in Fig. 5. Of course combinations of these two inventive options are also possible.

The mould 10 according to the present invention and shown merely by way of non-limiting example in Fig. 2 comprises several wall sections 12 that, in the embodiment shown, all extend in more than one plane. In the example of Fig. 2, the wall sections 12 all define a corner 15 of the mould as they all extend in two orthogonal directions, that is, in the length and the width of the crate. This design allows labels to be in-moulded at the corners, producing a crate having labels that cover and wrap around one or more of its corners.

Producing a crate using the mould 10 of Fig. 2 is similar to the exemplary Prior Art method discussed above, but for the shape of the mould sections which allow labels to be applied at corners. As can be seen, four labels 9 may be applied, but it will be understood that this number is largely arbitrary and that fewer than four may be applied, for example two. Any of the labels applied is fully supported by a respective wall section 12 and does not cover any of the seams 14 between the wall sections.

The plastic material is preferably injected from below, in a direction parallel to the plane(s) defined by the label so as to minimize any detrimental effect of the flow of plastic material. More in particular, injecting the plastic material parallel to the labels reduces any abrasion of the labels due to the flow of molten plastic. As a result, relatively thin and flexible labels may be used.

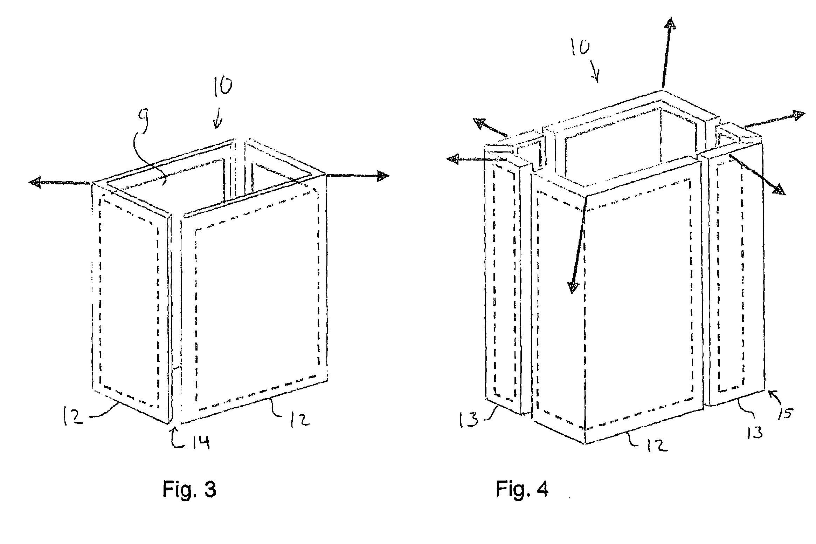

Instead of four wall sections 12, only two may be used that join at corners, as shown in Fig. 3. The embodiment of Fig. 3, which has the advantage of consisting of relatively few parts, allows two labels to be applied, each label extending over both a side wall and a front or back wall of the crate. It will be understood that the wall sections 12 shown in Fig. 3 may also be used to apply conventional labels on one face of the crate only.

The embodiment of Fig. 3 offers the additional advantage of having only two seams 14. This allows only two labels 9 to cover all four walls of the mould 10 and hence of the resulting crate. As the two labels may be identical, only one type of label is required to offer a very large label area and thereby a high visibility of the messages on the labels.

In the example of Fig. 4, some corner wall sections 11 and some planar wall sections 13 are used, the wall sections 13 having tapered edges joining at a corner 15. Wall sections defining a corner or angle may thus be combined with planar wall sections.

Another embodiment of the present invention is schematically shown in Figs. 5a-d, where a method is illustrated for applying a label circumferentially. In a first step shown in Fig. 5a mould walls 11 are assembled to form a circumferentially closed mould 10. In a second step shown in Fig. 5b a label 9 is inserted in the mould 10 and held against the walls 11, for instance by air pressure (suction) or a (temporary) adhesive. The mould 10 is placed on a mould base 16, as shown in Fig. 5c and then a mould cover 17 is placed on the mould 10, as shown in Fig. 5d. Subsequently, molten plastic material (not shown) may be injected into the mould 10, thus providing a crate having a circumferential label.

Instead of assembling the mould 10 from separate wall sections 11, as shown in Fig. 5a, it is possible to use a single, integral circumferentially closed wall section (not shown), using the natural shrinkage of plastics products to release the crate from the mould.

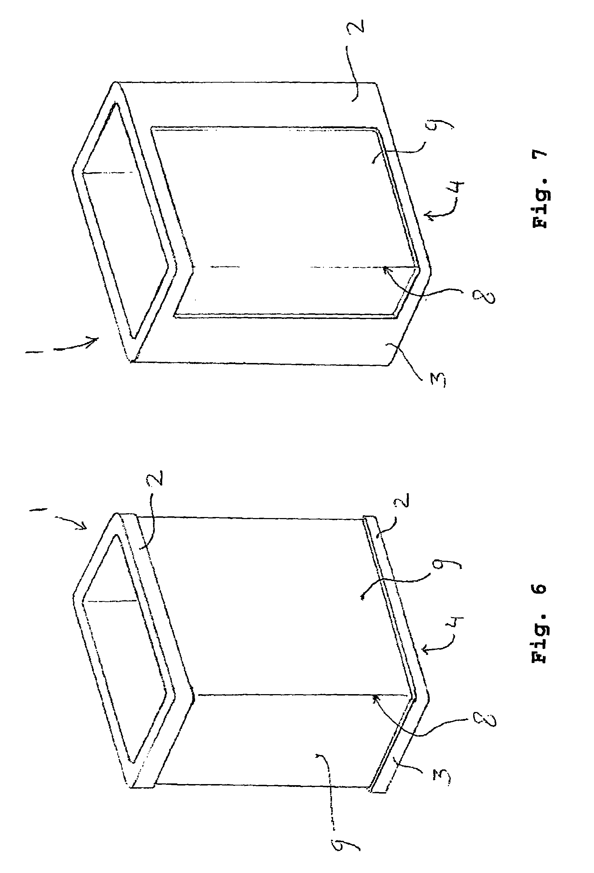

The exemplary crates 1 schematically shown in Figs. 6 and 7 comprises side walls 2, a front wall 3, a back wall (not shown), and a base 4. The crates 1 are preferably integrally formed.

The crates 1 are provided with labels 9, at least one of which extends over both a side wall 2 and the front wall 3 and thereby extends over and covers a corner or edge 8 of the crate. The walls of the crates 1 are preferably designed in such a way that the label 9 is slightly recessed, as shown, so as to prevent the label being damaged.

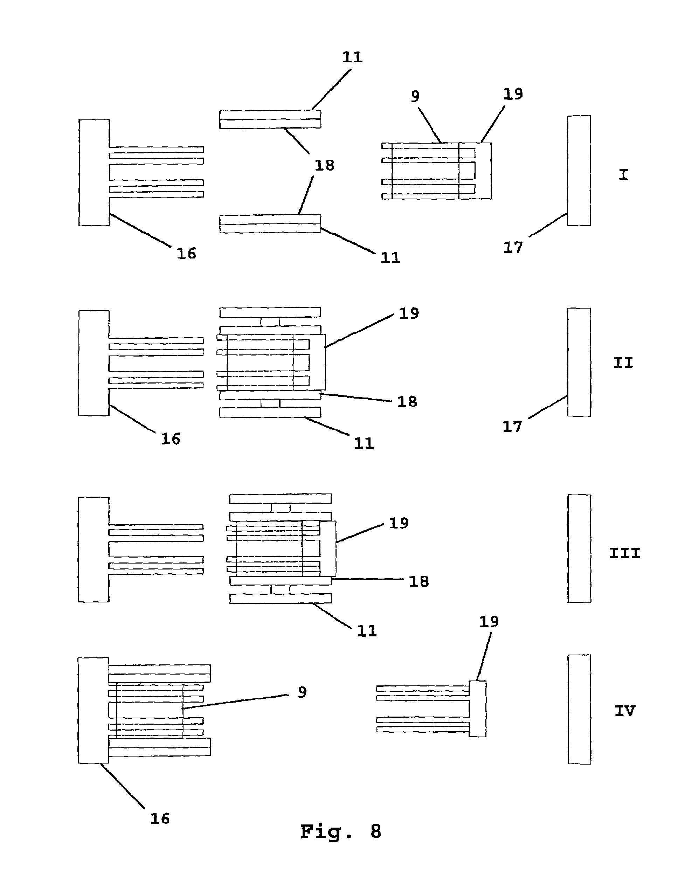

In the embodiment of Fig. 7. the label 9 extends over part of side wall 2 and part of side wall 3, thereby covering the corner 8. In the embodiment of Fig. 8, the label 9 is a circumferential label which fully encircles the crate. Of the side walls 2 and 3, only relatively small top and bottom regions are left uncovered in the present example. Of course the crate 1 could be designed in such a way that these uncovered regions are larger than shown in Fig. 6.

Four exemplary steps in a crate manufacturing process according to the present invention are schematically illustrated in Fig. 8. A mould (10 in Fig. 5a) is shown to comprise wall sections 11, a base section 16 and a cover section 17, which can be moved relative to each other. The wall sections 11 are, in the exemplary embodiment shown, provided with cavity slides 18 which are known means for varying the inner dimensions of a mould.

In step I, a label 9 is shown to be supported by a support element 19. The label 9 preferably is a circumferential (sleeve) label. The support element 19 has a variable diameter, as shown in steps III and IV, which allows an easy application of the label. The wall sections 11 are brought together.

In step II, the support element 19 and the label 9 are brought between the wall sections 11 of the mould. The cavity slides 18 are moved to the label 9. The cavity slides may be provided with suction elements or adhesive for holding and supporting the label 9.

In step III, the diameter of the support element 19 is reduced so as to release the label 9, which is now supported by the cavity slides 18.

In step IV, the support element 19 is removed and the wall sections 11 are placed against the base section 16 of the mould. In a subsequent step (not shown), the cover section 17 is placed in the wall sections 11 and the plastic material may then be injected. After sufficient cooling, the parts of the mould are removed and the crate having an in-moulded label is released. The support element 19 may be used for supporting the crate while the mould walls are being moved away.

By first bringing the wall sections together (closing the wall sections) and then bringing the closed wall sections, the base section and the cover section together (closing the remainder of the mould), a circumferential (sleeve-shaped) label may be applied. It is noted that in conventional moulds, all sections are brought together in one movement.

As mentioned above, the plastic material used in the present invention preferably is HDPE (High Density PolyEthylene), but other suitable materials may also be used. The mould is preferably made of metal, for example steel.

It will be understood by those skilled in the art that the present invention is not limited to the embodiments illustrated above and that many modifications and additions may be made without departing from the scope of the invention as defined in the appending claims.

## Claims

1. A plastic crate (1) having side walls (2, 3) extending substantially perpendicularly from a base (4), wherein a continuous in-mould label (9) is applied on at least two adjacent side walls (2, 3) so as to cover at least one corner (8) of the crate.

2. The crate according to claim 1, wherein the in-mould label (9) extends over all side walls (2, 3).

3. The crate according to claim 2, wherein the in-mould label (9) has an uninterrupted circumference.

4. A method of producing a plastic crate (1) according to any of the preceding claims using a mould (10) having wall sections (11, 12), a base section (16) and a cover section (17), the method comprising the steps of:
• placing the at least one label (9) on a support element (19).
• closing the wall sections (11. 12) around the support element,
• closing the mould,
• injecting a plastic material into the mould,
• opening the mould, and
• removing the moulded crate (1) from the mould.

5. The method according to claim 4, wherein the support element (19) has a variable circumference.

6. The method according to claim 4 or 5, wherein at least one wall section (12) defining walls of the crate extends in two intersecting planes so as to cover a corner (8) of the crate.

7. The method according to claim 6, wherein the two intersecting planes are arranged at a right angle.

8. The method according to claim 6, wherein the two intersecting planes are arranged at an acute or obtuse angle.

9. The method according to claim 6, wherein the at least one wall section (12) is substantially rounded.

10. A mould (10) for use in the method according to any of claims 4 - 9, the mould comprising wall sections (11), a base section (16) and a cover section (17), at least two wall sections (11) being provided with cavity slides (18) for supporting the at least one continuous label (9), which mould is arranged for first closing the wall sections (11) and then bringing the base section (16) and cover section (17) against the closed wall sections.
